# EUROPÄISCHE PATENTANMELDUNG

(11) **EP 1 679 206 A1**
(43) Veröffentlichungstag der Anmeldung: **12.07.2006**
(21) Anmeldenummer: 05112949.2
(22) Anmeldetag: 23.12.2005
(51) Int. Cl.: B60G 7/00, B60G 9/00

(54) **Vierpunktlenker zur Anbindung einer Starrachse an den Rahmen eines Nutzfahrzeuges**

(30) Priorität: 07.01.2005 DE 102005000902; 19.01.2005 DE 102005002515
(71) Anmelder: Linnemann-Schnetzer Verwaltungs-GmbH (Holding), 59229 Ahlen (DE)
(72) Erfinder: Dresig, Horst, Dr. Ing., 82152 Planegg (DE)
(74) Vertreter: Flötotto, Hubert

(57) **Zusammenfassung**

Die Erfindung betrifft einen Vierpunktlenker zur Anbindung einer Starrachse an den Rahmen eines Nutzfahrzeuges, wobei der Vierpunktlenker in der Draufsicht X-förmig ausgebildet ist und vier Lageraugen für die Anlenkung aufweist, von denen zwei Anlenkstellen mit der Starrachse und zwei mit dem Rahmen verbunden sind und die Wirkung des Vierpunktlenkers alleine betrachtet eine Querführungsfunktion und gegen Wankbewegungen eine Stabilisierungsfunktion und in Wirkverbindung mit Längslenkern betrachtet eine Längsführungsfunktion der Achse aufweist. Erfindungsgemäß besteht der Vierpunktlenker (100) aus einem gebauten, aus mehreren vorgefertigten Teilen (11, 12, 13, 14, 31, 32, 33, 41, 42, 43, 44, 51, 52, 53, 54, 61, 62, 63, 64, 65) zusammengeschweißten offenen X-förmigen Bauteil (10, 30, 40, 50, 60), das aus zwei unverstärkten (11, 12) oder verstärkten Blechen (31, 32, 41, 42, 51, 52, 61, 62, 71, 72, 81, 82) gebildet ist, und wobei an deren Armen außen vier Lageraugen (13, 34, 45, 55, 65, 75, 87), (15, 35, 45, 55, 66) angeordnet sind.

## Beschreibung

Die Erfindung betrifft einen Vierpunktlenker zur Anbindung einer Starrachse an den Rahmen eines Nutzfahrzeuges, wobei der Vierpunktlenker in der Draufsicht X-förmig ausgebildet ist und vier Lageraugen für die Anlenkung aufweist, von denen zwei Anlenkstellen mit der Starrachse und zwei mit dem Rahmen verbunden sind, und die Wirkung des Vierpunktlenkers alleine betrachtet eine Querführungsfunktion, und gegen Wankbewegung eine Stabilisierungsfunktion, und in Wirkverbindung mit Längslenkern betrachtet eine Längsführungsfunktion der Achse aufweist.

Aus dem Stand der Technik ist ein Vierpunktlenker dieser Art beispielsweise aus der EP 0 776 275 B1 bekannt. Der vorbekannte Vierpunktlenker ist ein verwindbares Kreuz mit definierter Verwindungskennlinie, an dem vier Lageraugen an den Enden des Kreuzes für die Anbindung an der Achse und dem Fahrzeugaufbau vorgesehen sind. Diese kreuzförmige Form des Vierpunktlenkers ist insbesondere in der Figur 5 der Druckschrift gezeigt. Der Querschnitt des dort gezeigten Vierpunktlenkers entspricht etwa einem Doppel-T-Querschnitt mit sich verändernder Ober- und Untergurtbreite, wobei der dort offenbarte Vierpunktlenker ein Gussteil ist. Eine weitere Ausführungsform zeigt die Figur 7 der genannten Druckschrift, wobei bei dieser Ausführungsform die kreuzförmig angeordneten Streben durch weitere Träger, die in einem Viereck angeordnet sind, versteift werden. Diese Ausführungsform eignet sich weniger zum Unterdrücken der Wankbewegungen des Fahrzeuges. In der genannten Druckschrift sind weitere Ausführungsbeispiele aufgezeigt. Beispielhaft wird in der Figur 8 eine Lösung gezeigt, bei der zwei Gusshalbschalen zu einem Hohlkörper zusammen gefügt sind. Nachteil dieser Ausführung ist, dass die Wandungen zwischen den Trägern aus ihrer Lage ausweichen können, was dann zur Zerstörung des Vierpunktlenkers führen kann. Würde bei dieser Ausführungsform die Wandung dicker ausfallen, wäre ein Gewichtsvorteil nicht mehr gegeben.

Bei diesen aus dem Stand der Technik bekannten Vierpunktlenker-Lösungen wird es als Nachteil angesehen, dass die bekannten Vierpunktlenker einerseits hinsichtlich ihrer Herstellungsart aufwendig zu fertigen sind, wobei andererseits die Gewichtsnachteile als vordergründig anzusehen sind.

Der Erfindung liegt daher die Aufgabe zu Grunde, einen leichten und kostengünstigen Vierpunktlenker bereit zu stellen, der auch hohe Kräfte aufnehmen kann und für unterschiedliche Belastungsansprüche in seinen Abmessungen leicht modifiziert werden kann.

Diese Aufgabe wird erfindungsgemäß dadurch gelöst, dass der Vierpunktlenker aus einem gebauten, aus mehreren vorgefertigten Teilen zusammengeschweißten, offenen x-förmigen Bauteil ist, das aus zwei unverstärkten oder verstärkten Blechen besteht, und wobei an deren Armen außen vier Lageraugen angeordnet sind. Aufgrund dieser Ausbildung ist es möglich geworden, aus einfachen Blechteilen eine versteifende Vierpunktlenker-Konstruktion bereit zu stellen, die insbesondere bei hoher Gewichtseinsparung unterschiedlichen Belastungsansprüchen gerecht wird. Modifizierungen in den Abmessungen des Vierpunktlenkers können schnell, einfach und leicht vorgenommen werden. Dadurch, dass der Vierpunktlenker aus einem gebauten, in der Draufsicht x-förmigen offenen Bauteil besteht, kann man eine Formgebung wählen, die zur Aufnahme von zu übertragenden Kräften optimal gestaltet werden kann. Deshalb hat das X-förmige offene Bauteil, an dessen Enden insgesamt vier Lageraugen vorhanden sind, in der Draufsicht von den Lageraugen beginnend zur Mitte des Bauteils hin veränderliche Breite. Dadurch kann eine belastungsoptimierte Gestaltung durchgeführt werden. An besonders hoch belasteten Lagerstellen, wie es beispielsweise die Anlenkstellen mit der Starrachse sein können, ist es vorteilhaft, wenn der Querschnitt des X-förmigen offenen Bauteils kurz vor der Schweißnaht zu dem jeweiligen Lagerauge hin erweitert ist. Dadurch erhält man eine etwas größere Schweißnahtlänge und verbesserte Kraftübertragung. Analog gilt für die Ausgestaltung der möglicherweise geschmiedeten Lageraugen, dass hier die Querschnittsführung so gewählt sein kann, dass sich zum Zusammenschweißen mit dem x-förmigen offenen Bauteil optimierte Schweißverbindungen ergeben. Die Beanspruchung des Vierpunktlenkers durch Kräfte aus der Fahrdynamik des Fahrzeugs ist sehr hoch, da der Vierpunktlenker einer zusammengesetzten wechselnden Beanspruchung unterliegt. Die Beanspruchung des Vierpunktlenkers durch Kräfte aus der Fahrdynamik des Fahrzeugs ist sehr hoch, da der Vierpunktlenker einer zusammengesetzten wechselnden Beanspruchung unterliegt.

Der Vierpunktlenker muss unter anderem, die aus Bremsmomenten resultierenden Abstützkräfte und Kräfte aus der Längsführungsbeanspruchung aufnehmen. Weiterhin hat er die Aufgabe, die Kräfte aus einer Querführungsfunktion von Fahrzeug und Achse aufzunehmen. Weiterhin müssen gerade beispielsweise bei einem LKW, bei dem der Gesamtschwerpunkt recht hoch liegen kann, Wankbewegungen des Fahrzeugs abgebaut, bzw. es muss den Wankbewegungen entgegen gewirkt werden. In diesem Fall wird der Vierpunktlenker mit einem Torsionsmoment beaufschlagt. Die drei genannten Beanspruchungen treten sehr oft kombiniert auf. Hinzu kommt, dass die Kräfte dynamisch sind und sich häufig alle addieren. Die Formgebung des Vierpunktlenkers ist entscheidend darüber, ob der Vierpunktlenker geeignet ist oder nicht. An dieser Stelle sei darauf hingewiesen, dass insbesondere bei Nutzfahrzeugen jedes Bauteil, das nicht optimal gestaltet ist, ein Verlust an zulässigem Beladungsgewicht bedeutet und damit das Fahrzeug in seiner Wettbewerbsfähigkeit am Markt behindert und einschränkt. Auch aus diesem Grund kann eine teurere Lösung, wenn sie leichter baut, die bessere Lösung sein.

Vorzugsweise ist das x-förmige offene Bauteil aus vorgefertigten, gedrückten und ebenen Blechteilen zusammengeschweißt. Das X-förmige offene Bauteil besteht aus einer Deck- und Bodenplatte bzw. einer Mittelplatte, die eben sind und aus den entsprechend geformten Stegen bestehen. Die genannten Teile können jedenfalls ein- oder mehrteilig sein. Die Formgebung von Deck- und Bodenplatte bzw. Mittelplatte hat beispielsweise den Sinn, dass eine definierte Kraftaufnahme möglich ist. Ein Ausknicken oder Ausbeulen, wie dies bei ebenen Platten möglich wäre, nicht erfolgen kann, und die Auslastung des Materials homogen erfolgt. Vorzugsweise sind die Lageraugen an den Enden des x-förmigen offenen Bauteils angeschweißt. Zur weiteren Gewichtseinsparung können die Lageraugen exzentrisch ausgebildet sein, wobei dann die dickere Seite der Lageraugen die Schweißseite ist. Das Material des x-förmigen offenen Bauteils und ggf. auch der Lageraugen ist ein legiertes Stahlhalbzeug, das auch schweißfähig ist.

Ausführungsbeispiele der Erfindung sind schematisch in den nachstehenden Figuren 1 bis 15 näher dargestellt; dabei zeigen:
- Figur 1:: Einen Vierpunktlenker in offener Blechausführung (10)
- Figur 2:: Eine Explosionszeichnung des Teils gemäß der Figur 1;
- Figur 3:: Einen Vierpunktlenker in einer weiteren offenen Blechausführung (30);
- Figur 4:: Einen Vierpunktlenker in einer weiteren offenen Blechausführung (40);
- Figur 5:: Einen Vierpunktlenker in einer weiteren offenen Blechausführung (50);
- Figur 6:: Einen Vierpunktlenker in einer weiteren offenen Blechausführung (60);
- Figur 7:: Einen Vierpunktlenker in einer weiteren offenen Blechausführung (70);
- Figur 8:: Einen Vierpunktlenker in einer weiteren offenen Blechausführung (80);
- Figur 9:: Eine weitere Ausführungsform eines Vierpunktlenkers in einer weiteren Ausführung (10.1)
- Figur 10:: Eine Explosionszeichnung des Teils gemäß der Figur 9;
- Figur 11:: Eine weitere Ausführungsform eines Vierpunktlenkers in einer weiteren Ausführung (30.1);
- Figur 12:: Eine weitere Ausführungsform eines Vierpunktlenkers in einer weiteren Ausführung (40.1);
- Figur 13:: Eine weitere Ausführungsform eines Vierpunktlenkers in einer weiteren Ausführungsform (50.1);
- Figur 14:: Eine weitere Ausführungsform eines Vierpunktlenkers in einer weiteren Ausführungsform (60.1);
- Figur 15:: Einen Vierpunktlenker in der Einbausituation im Fahrzeug.

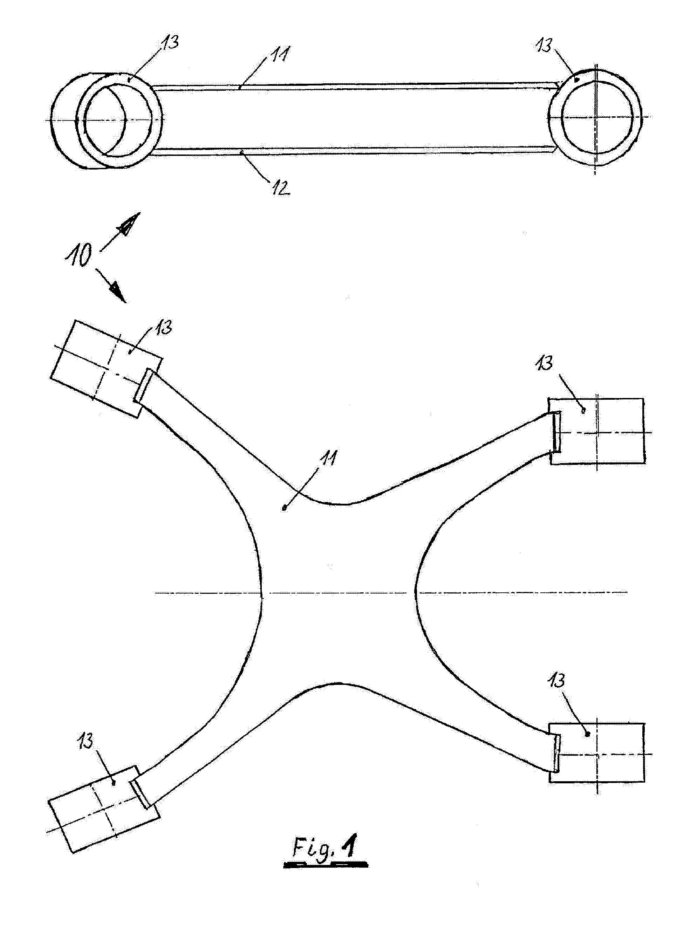

Die Figur 1 zeigt den Vierpunktlenker mit dem x-förmigen Bauteil 10 in Blechausführung. Die Deckplatte 11 und die Bodenplatte 12 sind eben und können ggf. aus mehreren Teilen bestehen. Erkennbar ist, dass die Deck- und Bodenplatte 11 und 12 des x-förmigen offenen Bauteils von den Lageraugen 13 zur Mitte hin veränderlichen Querschnitt haben. Deck- und Bodenplatte 11 und 12 besitzen in der Darstellung eine Schweißnahtvorbereitung und sind spiegelgleich. Die Lageraugen 15 sind angeschweißt. Beispielsweise kann die Torsionssteifigkeit des Vierpunktlenkers durch Veränderung des Abstandes zwischen Deck- und Bodenplatte 11 und 12 durch ihre Formgebung und durch Wahl ihrer Blechstärken leicht variiert werden, wobei natürlich die Zulässigkeit der Spannungen beachtet werden muss.

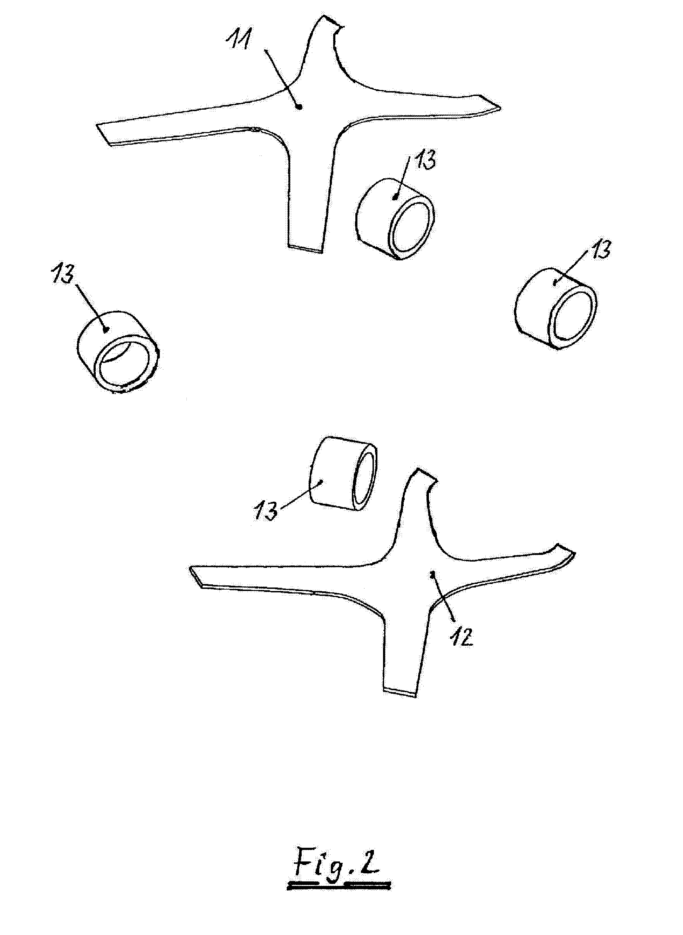

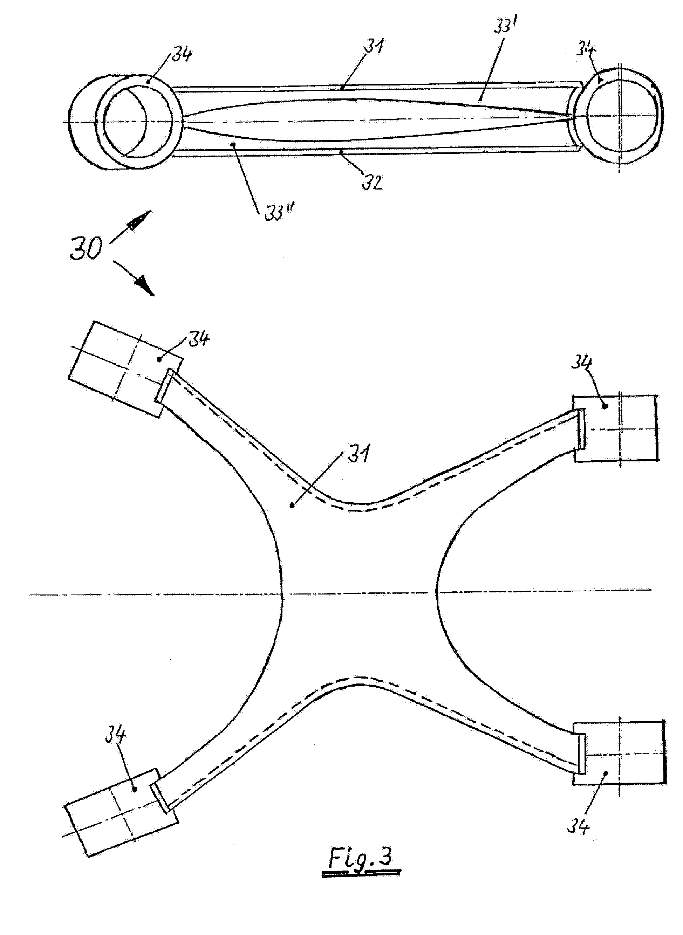

Figur 2 zeigt eine Explosionszeichnung von Figur 1. Die Blechteile 11 und 12 sind vorgefertigt und eben. Die Figur 3 zeigt den Vierpunktlenker mit dem x-förmig offenen Bauteil 30 in einer Ausführung, bei der im Unterschied zu der Figur 1 gezeigten Ausführung Deck- und Bodenplatte 31 und 32 Versteifungen besitzen, die seitlich nahe oder an den Außenkanten der Deck- bzw. Bodenplatte 31 und 32 angeordnet sind. Die Kontur der symmetrischen Versteifungen 33' und 33" wird nach Steifigkeits- und Festigkeitskriterien bestimmt. Ob alle dargestellten Schweißnähte erforderlich sind, kann je nach Erfordernis festgelegt werden. Beides gilt auch für alle im Folgenden genannten Versteifungen.

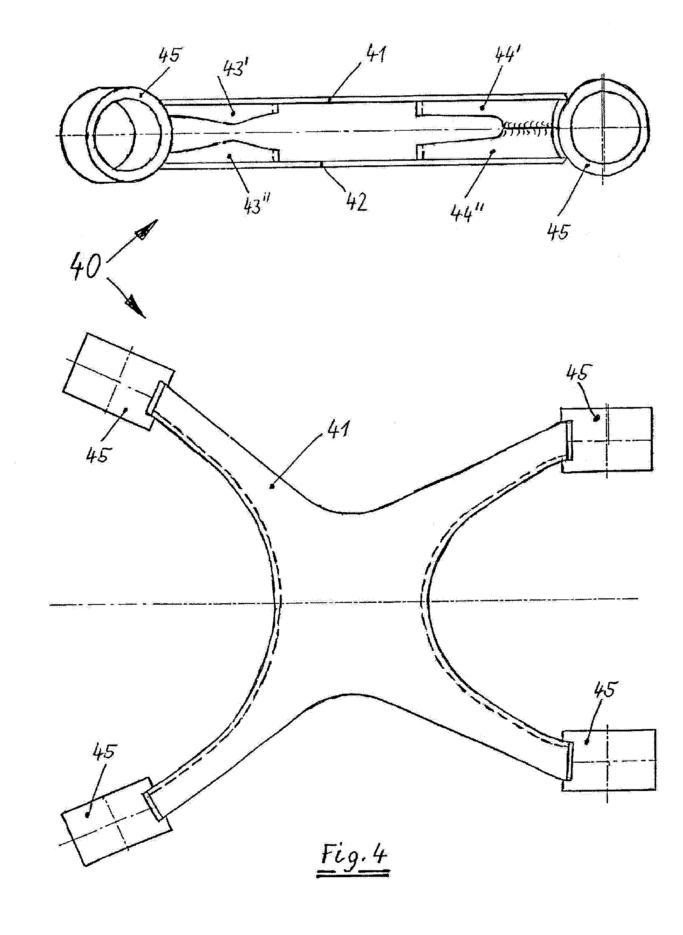

Figur 4 zeigt den Vierpunktlenker mit dem x-förmigen offenen Bauteil 40 in einer weiteren Ausführung, bei der im Unterschied zu der in Figur 3 gezeigten Ausführung die vertikalen Versteifungen vorn und hinten 43', 43" und 44', 44" angeordnet sind.

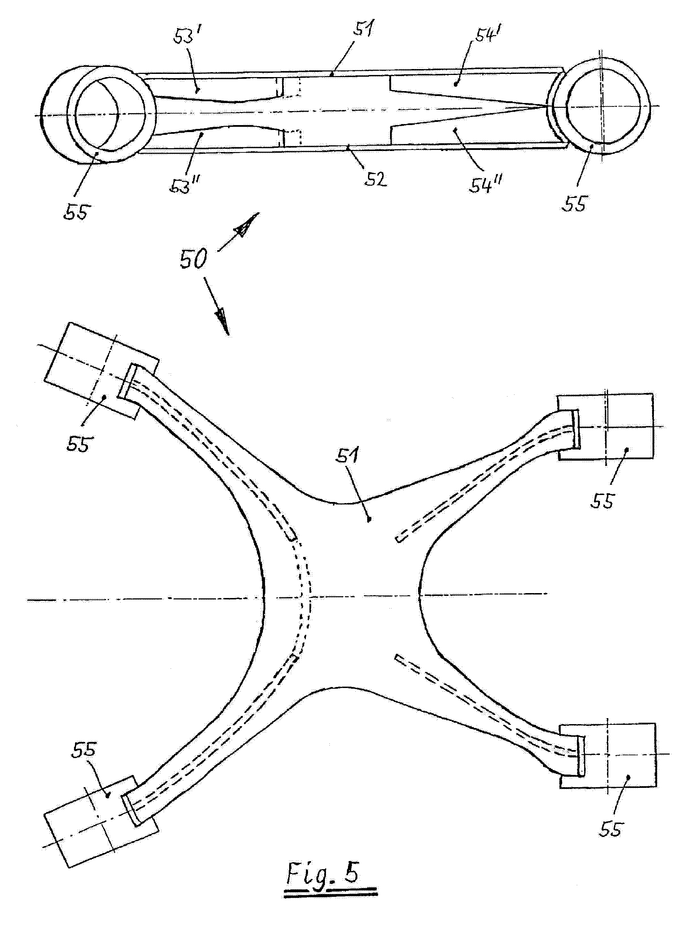

Figur 5 zeigt den Vierpunktlenker mit dem x-förmigen Bauteil 50 in einer weiteren Ausführung, bei der die vertikalen Versteifungen 53', 53" und 54', 54" und die nicht sichtbaren symmetrischen Teile als gedrückte Bleche dargestellt sind, aber auch ebene Bleche sein können. Es können jeweils auch die symmetrischen Versteifungen 53', 53" bzw. 54', 54" so verlängert werden, dass sie sich in der vertikalen Symmetrieebene berühren und damit zu jeweils einem Teil werden. Bei Verlängerung in Fahrtrichtung können die Versteifungen 53 und 54 jeweils gleichfalls ein Teil werden.

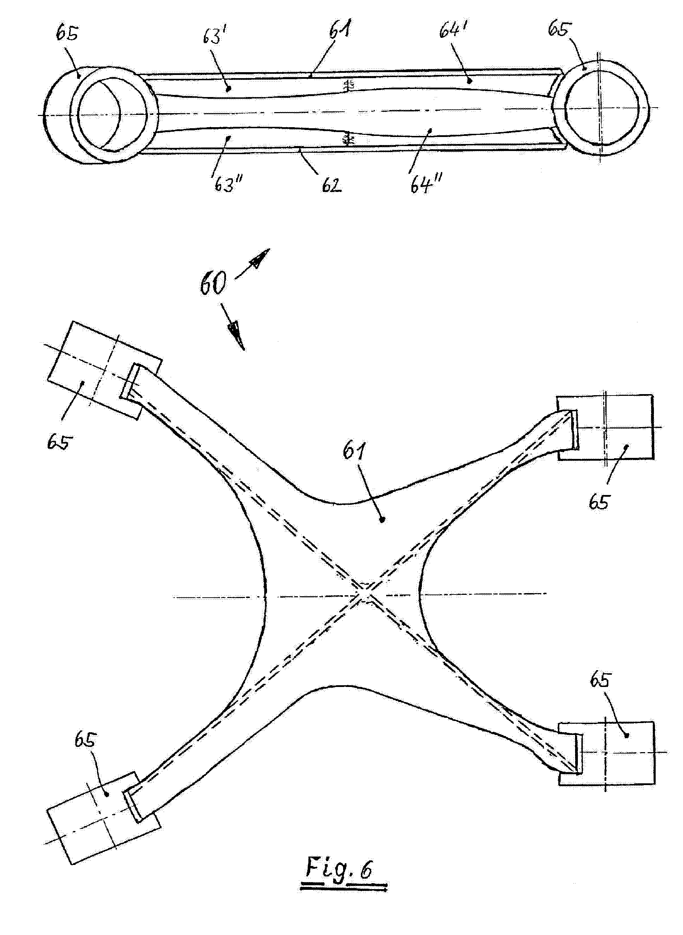

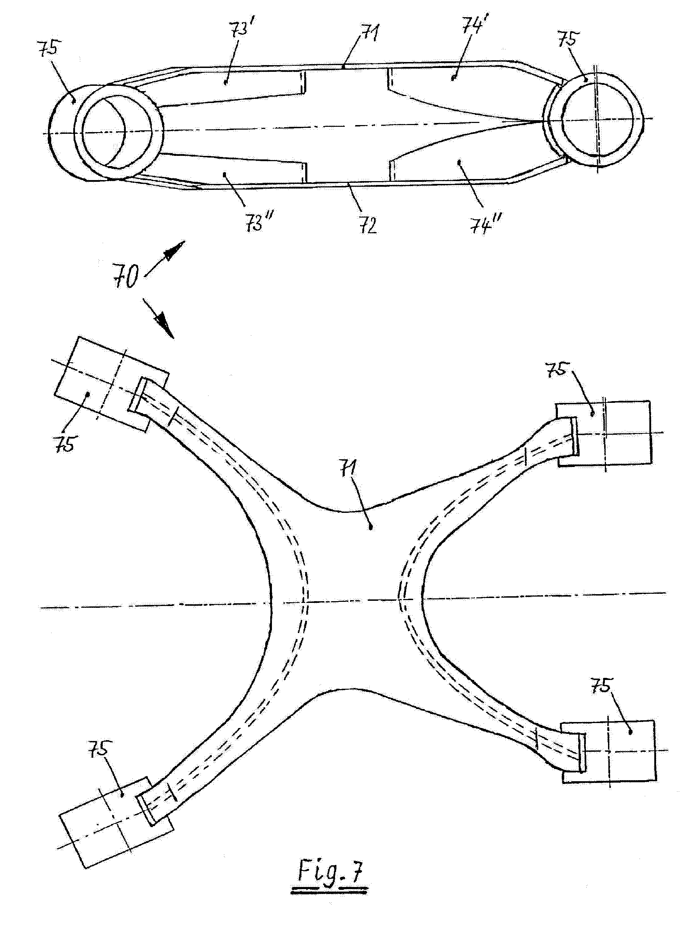

Figur 6 zeigt den Vierpunktlenker mit dem x-förmigen Bauteil 60 in einer weiteren Ausführung, bei der die Versteifungen jeweils gerade oder gekrümmt diagonal von einem achsseitigen zum rahmenseitigen Lagerauge 65 gehen (63' mit 64' bzw. 63" mit 64' ') und im Treffpunkt nicht verschweißt oder verschweißt sein können. Figur 7 zeigt den Vierpunktlenker mit dem x-förmigen Bauteil 70 in einer weiteren Ausführung, bei der die Arme der Deck- und Bodenplatte 71 und 72 relativ nahe an den Lageraugen 75 etwa parallel zu deren Achse gebogen sind, so dass sich gegenüber geraden Platten eine geänderte Steifigkeit ergibt, aber auch der Vorteil entsteht, dass sich unter den Lageraugen 75 weniger Schmutz ansammeln kann.

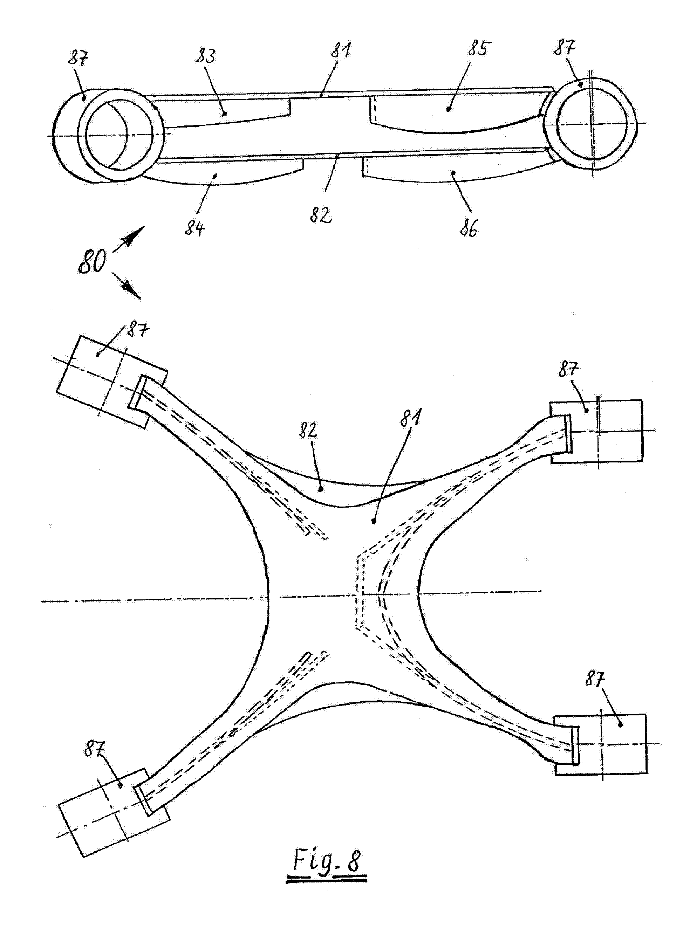

Figur 8 zeigt den Vierpunktlenker mit dem x-förmigen Bauteil 80 in einer Ausführung, bei der im Unterschied zu allen bisherigen gezeigten Ausführungen Deck- und Bodenplatte 81 und 82 nicht symmetrisch sind, ebenso müssen die Versteifungen 83, 84, bzw. 85, 86 nicht spiegelsymmetrisch sein. Ein Vorteil der bevorzugt senkrecht angeordneten Versteifungen 84, 86 die jeweils nach unten zeigen, ist beispielsweise die Vermeidung von Schmutzansammlungen an den Lageraugen 87.

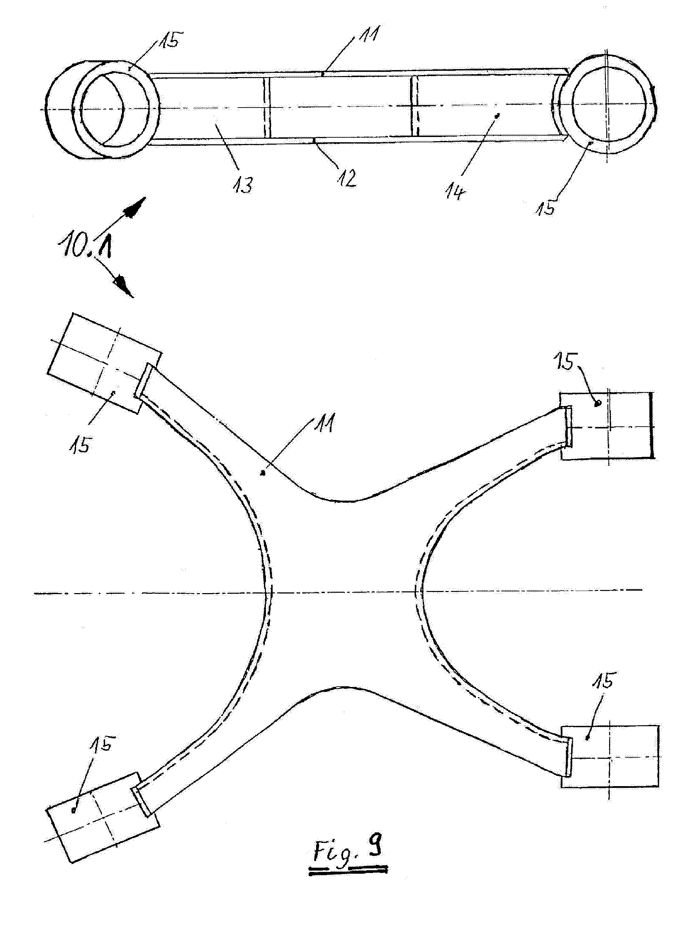

Die Figur 9 zeigt einen Vierpunktlenker mit dem X-förmigen offenen Bauteil 10.1 in Blechausführung. Die Deckplatte 11 und die Bodenplatte 12 sind eben und können ggf. aus mehreren Teilen bestehen. Erkennbar ist, wie Deck- 11 und Bodenplatte 12 des X-förmigen offenen Bauteils von den Lageraugen 13 zur Mitte hin veränderlichen Querschnitt haben. Deck- 11 und Bodenplatte 12 besitzen in der Darstellung eine Schweißnahtvorbereitung und sind spiegelgleich. Die Lageraugen 15 sind angeschweißt. In der Seitenansicht oben erkennt man in der Mitte den Durchzug, also eine Öffnung, die oben und unten nur von der Deck- 11 und Bodenplatte 12 begrenzt ist. In diesem Bereich ist der Vierpunktlenker besonders verwendungsweich. Beispielsweise kann die Torsionssteifigkeit des Vierpunktlenkers durch Veränderung des Abstandes zwischen Deck- und Bodenplatte 11 und 12 und durch Wahl der Blechstärke der Bauteile 11, 12, 13 und 14 leicht variiert werden, wobei natürlich die Zulässigkeit der Spannungen beachtet werden muss.

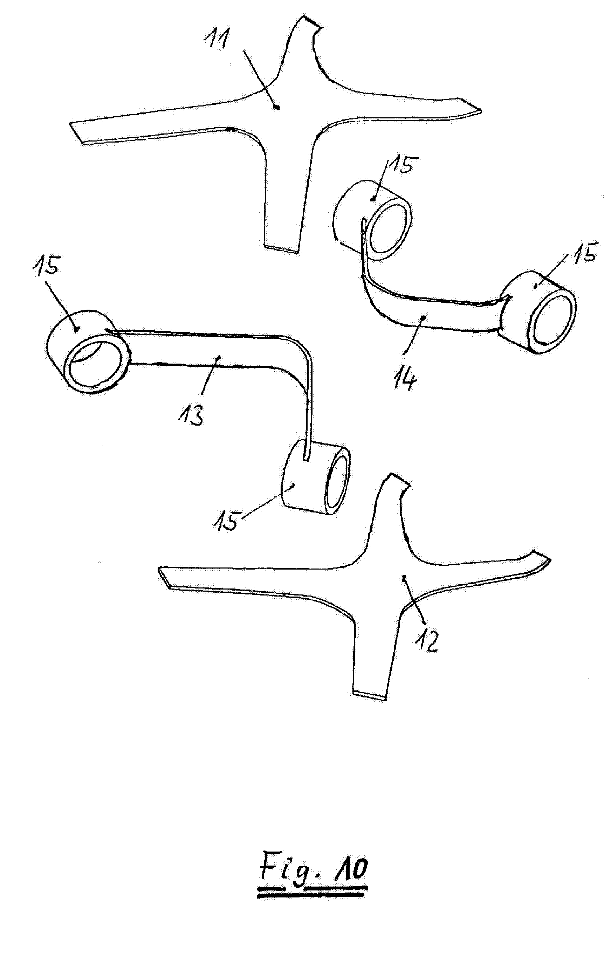

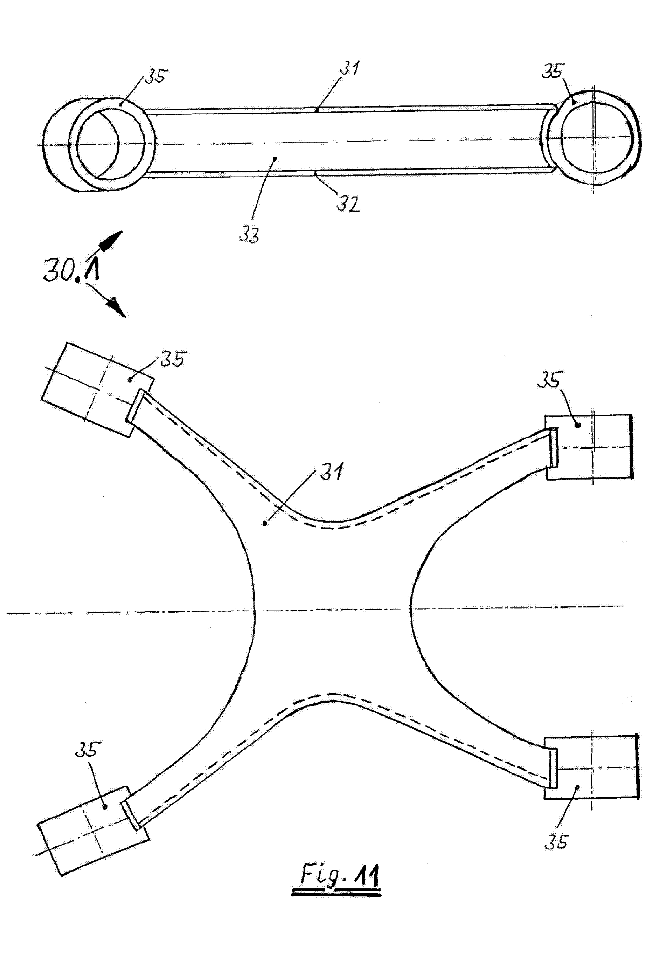

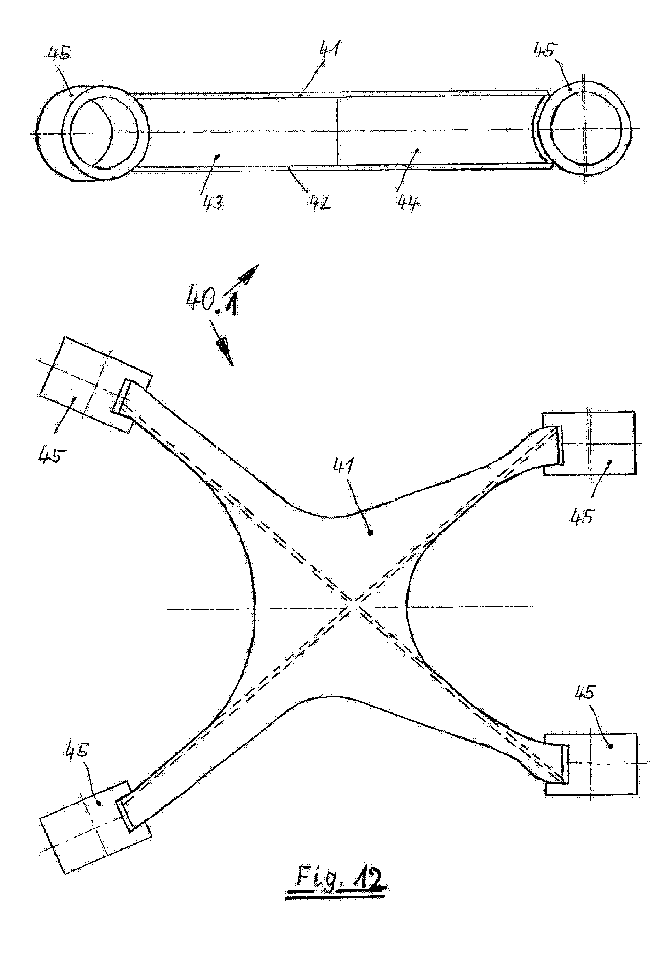

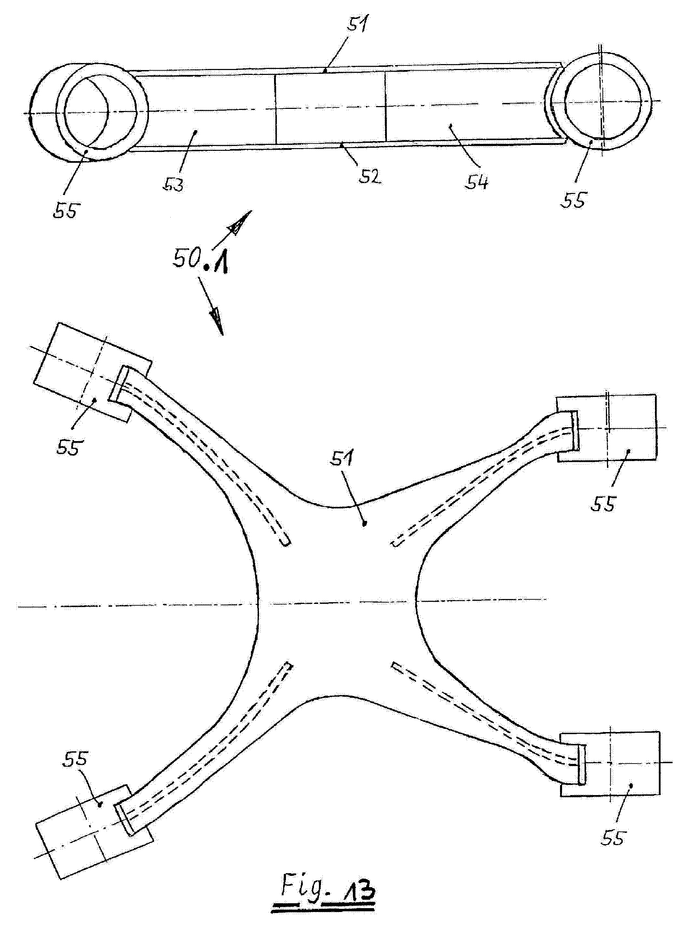

Figur 10 zeigt eine Explosionszeichnung von Figur 9. Die Blechteile 11, 12, 13 und 14 sind vorgefertigt, die Blechteile 13 und 14 gedrückt. Die Figur 11 zeigt den Vierpunktlenker mit dem x-förmigen offenen Bauteil 30.1 in einer weiteren Ausführung, bei der im Unterschied zu der Figur 9 gezeigten Ausführung die vertikalen Stege 33 seitlich angeordnet sind, und sich der Durchzug in Fahrtrichtungssymmetrieachse befindet. Die Figur 12 zeigt den Vierpunktlenker mit dem x-förmigen offenen Bauteil 40.1 in einer weiteren Ausführung, bei der im Unterschied zu der Figur 1 gezeigten Ausführung die vertikalen Stege 43, 44 keinen Durchzug lassen. Die Stege 43 und 44 und die nicht sichtbaren symmetrischen Teile sind als ebene Bleche 41 und 42 dargestellt, können aber auch gedrückte Bauteile sein. Figur 13 zeigt den Vierpunktlenker mit dem x-förmigen offenen Bauteil 50.1 in einer weiteren Ausführung, bei der im Unterschied zu der Figur 1 gezeigten Ausführung die vertikalen Stege 53 und 54 Durchzüge in beiden horizontalen Richtungen lassen. Die Stege 53 und 54 und die nicht sichtbaren symmetrischen Teile sind als gedrückte Bleche 51 und 52 dargestellt, können aber auch ebene Bleche sein. Es können jeweils auch die Stege 53 und 54 so verlängert werden, dass kein Durchzug in Fahrtrichtung oder senkrecht dazu mehr besteht. Bei Verlängerung bis in die Symmetrieebene kann ein x-förmiges offenes Bauteil, wie in Figur 12, entstehen.

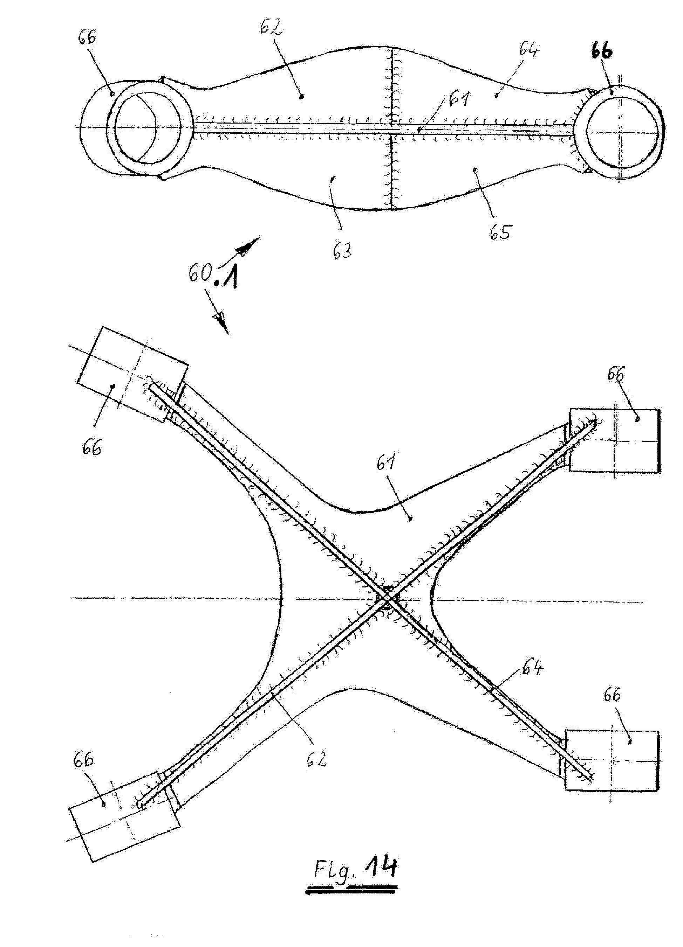

Die Figur 14 zeigt den Vierpunktlenker mit dem x-förmigen offenen Bauteil 60.1 in einer weiteren Ausführung, bei der im Unterschied zu der in Figur 9, 10, 11 und 12 gezeigten Ausführung statt der Deck- und Bodenplatte 11 und 12 nur eine mittlere Platte 61 vorgesehen ist. Die äußere Kontur der vertikalen Bleche 62 bis 65 und der nicht bezifferten symmetrischen Teile wird nach Steifigkeits- und Festigkeitskriterien bestimmt. Die Bleche 62, 63 bzw. 64 und 65 sind vorzugsweise symmetrisch. Die vertikalen Bleche 62 bis 65 und die nicht bezifferten symmetrischen Teile sind in Darstellung eben. Sie können aber auch gedrückt sein. Ob alle dargestellten Schweißnähte erforderlich sind, kann je nach Erfordernis festgelegt werden.

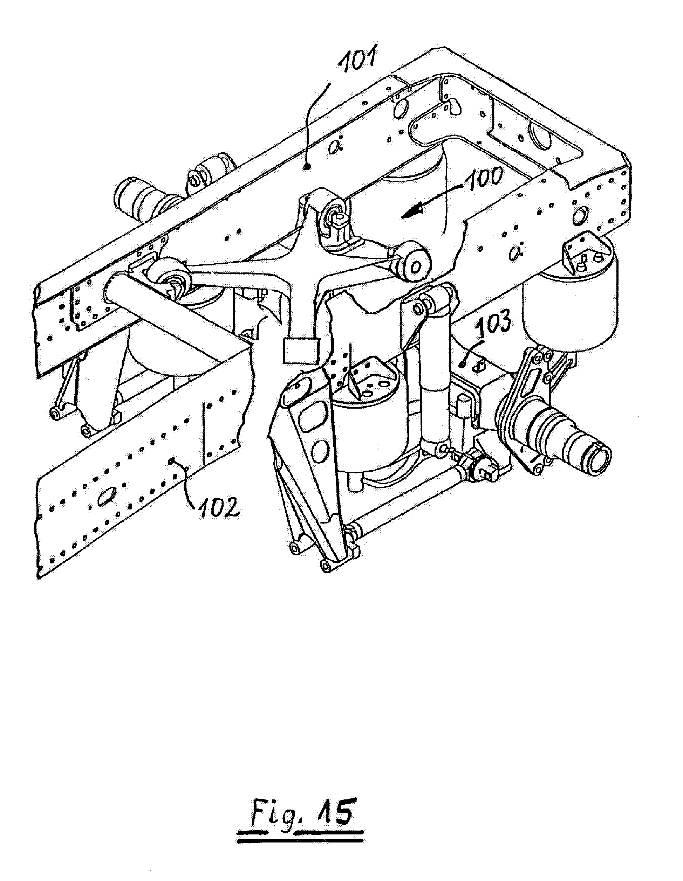

Die Figur 15 zeigt den Einbau des Vierpunktlenkers 100 in einem LKW. Der Vierpunktlenker 100 ist mit zwei Armen mit dem Rahmen 101, 102 und zwei Armen mit der Achse 103 verbunden. Der Vierpunktlenker 100 ersetzt Längs- und Querlenker, Dreieckslenker, an dieser Stelle, sowie einen Stabilisator an dieser Achse. Das erfindungsgemäße x-förmige Bauteil besteht aus zwei unverstärkten oder verstärkten Blechen, die gedrückt oder eben sind, und aus ebenen oder gedrückten Versteifungen. Die genannten Teile können jeweils ein- oder mehrteilig sein. Die Versteifungen werden an Deck- bzw. Bodenplatte verschweißt. Die Formgebung und Versteifung von Deck- und Bodenplatte hat beispielsweise den Sinn, dass eine definierte Kraftaufnahme möglich ist. Da ein Ausknicken oder Ausbeulen, wie dies bei ebenen Platten möglich wäre, nicht erfolgen kann, und die Auslastung des Materials homogen erfolgt. Vorzugsweise sind die Lagerungen an den Enden der x-förmig offenen Bauteile angeschweißt. Zur weiteren Gewichtseinsparung können die Lageraugen exzentrisch ausgebildet sein, wobei dann die dickere Seite der Lageraugen Schweißseite ist.

Die Ausführungen eines Vierpunktlenkers gemäß den Figuren 1 bis 8 besteht aus einem gebauten, aus mehreren vorgefertigten Teilen (11, 12, 31, 32, 33, 41, 42, 43 44, 51, 52, 53, 54, 61, 62, 63, 64, 71, 72, 73, 74, 81, 82, 83, 84, 85, 86) zusammengeschweißten Bauteil aus zwei unverstärkten (11, 12) oder verstärkten Blechen (31, 32, 41, 42, 51, 52, 61, 62, 71, 72, 81, 82), an deren Armen außen vier Lageraugen (13, 34, 45, 55, 65, 75, 87) angeordnet sind. Die vorgefertigten Teile (11, 12, 31, 32, 33, 41, 42, 43, 44, 51, 52, 53, 54, 61, 62, 63, 64, 71, 72, 73, 74, 81, 82, 83, 84, 85, 86) des zusammengeschweißten Bauteiles sind aus zwei unverstärkten (11, 12) oder verstärkten Blechen (31, 32, 41, 42, 51, 52, 61, 62, 71, 72, 81, 82) gedrückte oder ebene Blechteile. Das zusammengeschweißte Bauteil besteht aus zwei unverstärkten (10) oder verstärkten Blechen (30, 40, 50, 60, 70, 80) aus einer Deckplatte (11, 31, 41, 51, 61, 71, 81) und einer Bodenplatte (12, 32, 42, 52, 62, 72, 82), die jeweils bevorzugt einteilig sein können und ohne (10) oder mit zwei oder mehreren gebogenen oder ebenen, bevorzugt vertikalen Versteifungen (33, 43, 44, 53, 54, 63, 64, 73, 74, 83, 84, 85, 86) verschweißt sind.

Die bevorzugt vertikalen Versteifungen berühren sich in der horizontalen Symmetrieachse der Lageraugen nicht (30, 40 links, 50 links, 60, 70 links) oder sie treffen sich gegebenenfalls teilweise in der horizontalen Symmetrieebene der Lageraugen (30 rechts, 40 rechts, 50 rechts, 70 rechts) und in dieser Symmetrieebene (oder auch davon abweichend) können sie zusammengeschweißt sein (z. B. 44' mit 44") oder über die bevorzugt vertikale Höhe aus einem oder mehreren ggf. durchgehenden Teilen (44' mit 44" als ein Teil), die z. B. zur Gewichtseinsparung auch gelocht sein können.

Die bevorzugt vertikalen Versteifungen sind nahe oder an der Außenkontur der Deck- (31, 41) bzw. Bodenplatte (32, 42) gegenüberliegend angeordnet, indem sie eine Art Bogen entweder vom achsseitigen Lagerauge zum anderen achsseitigen Lagerauge (44) und vom rahmenseitigen Lagerauge zum anderen rahmenseitigen Lagerauge (43) oder vom jeweils achsseitigen Lagerauge zum rahmenseitigen Lagerauge (33) bilden oder auch beides zusammen. Die bevorzugt vertikalen Versteifungen (53, 54) sind mehr in der Mitte der Deck- (51) oder Bodenplatte (52) angeordnet und paarweise jeweils nicht von einem Lagerauge bis zu einem anderen Lagerauge reichen (z. B. 54' und 54") oder sich paarweise berühren (z. B. 53' bzw. 53", woraus dann jeweils ein Teil werden kann).

Die bevorzugt vertikalen Versteifungen, die ein- oder zweiteilig sein können, gehen jeweils gerade oder gekrümmt diagonal von einem achsseitigen zu einem rahmenseitigen Lagerauge (63' mit 64' bzw. 63" mit 64") und können im Treffpunkt nicht verschweißt oder verschweißt sein. Das Deck- (71) bzw. Bodenblech (72) ist gedrückt, beispielsweise so, dass die vier Arme so gebogen werden, dass die Biegelinien bevorzugt etwa parallel zu den Mittellinien der Lageraugen (75) angeordnet sind. Deck- (71) bzw. Bodenblech (72) können unverstärkt oder verstärkt sein, z. B. wie in (70) mit bevorzugt vertikalen Versteifungen (73, 74). Das Deck- (81) bzw. Bodenblech (82) ist nicht symmetrisch zur horizontalen Symmetrieachse der Lageraugen ausgebildet, z. B. können evtl. vorgesehene bevorzugt senkrecht angeordnete Versteifungen beispielsweise zur Vermeidung von Schmutzansammlungen jeweils nach unten zeigen (83, 84, 85, 86), wobei diese Versteifungen ähnlich ausgeführt werden können und Deck- (81) bzw. Bodenblech (82) unterschiedliche Höhe zur horizontalen Symmetrieachse der Lageraugen haben können und gegebenenfalls unterschiedliche Konturen besitzen.

An besonders hochbelasteten Randstellen der in der Draufsicht X-förmigen beiden Deck (11, 31, 41, 51, 61, 71, 81) bzw. Bodenbleche (12, 32, 42, 52, 62, 72, 82) ist, beispielsweise an den Anlenkstellen mit der Starrachse, die Breite der Deck(11, 31, 41, 51, 61, 71, 81) bzw. Bodenbleche (12, 32, 42, 52, 62, 72, 82) relativ kurz vor der Schweißnaht bzw. dem Anschluss zum jeweiligen Lagerauge (13, 34, 45, 55, 65, 75, 87) hin verbreitert. Die Lageraugen (13, 34, 45, 55, 65, 75, 87) können zentrisch oder exzentrisch sein können und wobei bei der exzentrischen Ausführung die dickere Seite Schweißseite ist.

Die Lageraugen (13, 34, 45, 55, 65, 75, 87) sind an den Enden des in der Draufsicht X-förmigen Bauteils (10, 30, 40, 50, 60, 70, 80) angeschweißt. Das zusammengeschweißte Bauteil aus zwei unverstärkten oder verstärkten Blechen (10, 30, 40, 50, 60, 70, 80) und gegebenenfalls die Lageraugen (13, 34, 45, 55, 65, 75, 87) aus einem legierten Stahlhalbzeug, das auch schweißfähig ist, bestehen beispielsweise aus Stahl 1.7734 (Cr-Mo-Stahl).

Die bevorzugt senkrecht aufeinander stehenden Blechteile sind so angeordnet oder schweißtechnisch vorbereitet sind, dass sie am T-oder L-Stoß bedarfsweise einseitig oder beidseitig verschweißt werden können, dass die Lageraugen (13, 34, 45, 55, 65, 75, 87) als passend schweißbare Schmiedeteile so mit einem Ansatz gefertigt sind, dass das zusammengeschweißte Bauteil aus zwei unverstärkten oder verstärkten Blechen angeschweißt werden kann, z. B. indem die Lageraugen geeignete Einschmiedungen oder Einfräsungen zum geeigneten Anschweißen aufweisen.

Die Ausführungen eines Vierpunktlenkers gemäß den Figuren 9 bis 14 besteht aus einem gebauten, aus mehreren vorgefertigten Teilen (11, 12, 13, 14, 31, 32, 33, 41, 42, 43, 44, 51, 52, 53, 54, 61, 62, 63, 64, 65) zusammengeschweißten offenen Bauteil (10.1, 30.1, 40.1, 50.1, 60.1), an dessen vier Armen außen Lageraugen (15, 35, 45, 55, 66) angeordnet sind. Die vorgefertigte Teile (11, 12, 13, 14, 31, 32, 33, 41, 42, 43, 44, 51, 52, 53, 54, 61, 62, 63, 64, 65) des X-förmigen offenen Bauteils (10.1, 30.1, 40.1, 50.1, 60.1) sind gedrückte oder ebene Blechteile. Das X förmige offene Bauteil (10.1, 30.1, 40.1, 50.1) besteht aus einer Deckplatte (11, 31, 41, 51) und einer Bodenplatte (12, 32, 42, 52) besteht, die jeweils bevorzugt einteilig sein können und mit zwei oder mehreren gebogenen oder ebenen vertikalen Stegen (13, 14, 33, 43, 44, 53, 54) verschweißt sind. Die vertikalen Stege berühren sich in einer etwaigen Symmetrieachse nicht, so dass ein horizontaler Durchzug (10.1, 30.1, 50.1) gegeben ist oder sie berühren sich (40.1). Die vertikalen Stege sind nahe oder an der Außenkontur der Deck- (11, 31) bzw. Bodenplatte (12, 32) gegenüberliegend angeordnet sind, indem sie eine Art Bogen entweder vom achsseitigen Lagerauge zum anderen achsseitigen Lagerauge (14, 10) und vom rahmenseitigen Lagerauge zum anderen rahmenseitigen Lagerauge (15,10) oder vom jeweils achsseitigen Lagerauge zum rahmenseitigen Lagerauge (33,30) bilden und damit einen horizontalen Durchzug senkrecht oder in Richtung der Fahrzeuglängsachse bilden, oder dass die vertikalen Stege (43, 44, 53, 54) mehr in der Mitte der Deck- (41, 51) oder Bodenplatte (42, 52) angeordnet sind und keinen (40.1) oder ein oder zwei Durchzüge (50.1) bilden.

An besonders hochbelasteten Randstellen, beispielsweise an den Anlenkstellen mit der Starrachse, ist die Breite der Deck- (11, 31, 41, 5 1) bzw. Bodenplatte (12, 32, 42, 52) relativ kurz vor der Schweißnaht bzw. dem Anschluss zum jeweiligen Lagerauge (15, 35, 45, 55) hin verbreitert. Die Lageraugen (15, 35, 45, 55, 66) können zentrisch oder exzentrisch sein (60.1), wobei bei der exzentrischen Ausführung die dickere Seite die Schweißseite ist. Das X-förmige offene Bauteil 60.1 besteht aus einer mittleren Platte (61) und ist darauf bevorzugt aus senkrecht angeordneten geraden oder gebogenen Blechen (62, 63, 64, 65) gebildet, die miteinander verschweißt sind, wobei die Bleche (62 bis 65) zusammenstoßen können oder nicht, und wobei die Höhe der Bleche (62, 63, 64, 65) nach Festigkeitsgesichtspunkten gestaltet sind. Die bevorzugt senkrechten Bleche (62, 63, 64, 65) sind in der Höhe durchgängig und die mittlere Platte (61) besteht aus mehreren Teilen und ist an den bevorzugt senkrechten Blechen verschweißt.

Die Lageraugen (15, 35, 45, 55, 66) sind an den Enden des X-förmigen offenen Bauteils (10.1, 30.1, 40.1, 50.1, 60.1) angeschweißt. Das X-förmige offene Bauteil (10.1, 30.1, 40.1, 50.1, 60.1) und gegebenenfalls die Lageraugen (15, 35, 45, 55, 66) aus einem legierten Stahlhalbzeug, das auch schweißfähig ist, beispielsweise aus Stahl 1.7734 (Cr-Mo-Stahl) bestehen. Die bevorzugt senkrecht aufeinander stehenden Blechteile sind so angeordnet oder schweißtechnisch vorbereitet, dass sie am T- oder L-Stoß bedarfsweise einseitig oder beidseitig verschweißt werden können. Die Lageraugen (15, 35, 45, 55, 66) sind als passend schweißbare Schmiedeteile so mit einem Ansatz gefertigt, dass das X-förmige offene Bauteil angeschweißt werden kann.

## Patentansprüche

1. Vierpunktlenker zur Anbindung einer Starrachse an den Rahmen eines Nutzfahrzeuges, wobei der Vierpunktlenker in der Draufsicht X-förmig ausgebildet ist und vier Lageraugen für die Anlenkung aufweist, von denen zwei Anlenkstellen mit der Starrachse und zwei mit dem Rahmen verbunden sind und die Wirkung des Vierpunktlenkers alleine betrachtet eine Querführungsfunktion, und gegen Wankbewegungen eine Stabilisierungsfunktion, und in Wirkverbindung mit Längslenkern betrachtet eine Längsführungsfunktion der Achse aufweist,
**dadurch gekennzeichnet,**
**dass** der Vierpunktlenker (100) aus einem gebauten, aus mehreren vorgefertigten Teilen (11, 12, 13, 14, 31, 32, 33, 41, 42, 43, 44, 51, 52, 53, 54, 61, 62, 63, 64, 65) zusammengeschweißten offenen X-förmigen Bauteil (10, 30, 40, 50, 60) besteht, das aus zwei unverstärkten (11, 12) oder verstärkten Blechen (31, 32, 41, 42, 51, 52, 61, 62, 71, 72, 81, 82) gebildet ist, und wobei an deren Armen außen vier Lageraugen (13, 34, 45, 55, 65, 75, 87), (15, 35, 45, 55, 66) angeordnet sind.

2. Vierpunklenker nach Anspruch 1,
**dadurch gekennzeichnet,**
**dass** das X-förmige offene Bauteil (10, 30, 40, 50) aus einer Deckplatte (11, 31, 41, 51) und einer Bodenplatte (12, 32, 42, 52) besteht, die jeweils bevorzugt einteilig sein können und mit zwei oder mehreren gebogenen oder ebenen vertikalen Stegen (13, 14, 33, 43, 44, 53, 54) verschweißt sind.

3. Vierpunktlenker nach Ansprüchen 1 und 2,
**dadurch gekennzeichnet,**
**dass** die vertikalen Stege sich in einer etwaigen Symmetrieachse nicht berühren, so dass ein horizontaler Durchzug (10, 30, 50) gegeben ist oder sich berühren (40).

4. Vierpunktlenker nach Ansprüchen 1 bis 3,
**dadurch gekennzeichnet,**
**dass** die vertikalen Stege nahe oder an der Außenkontur der Deck-(11, 31) bzw. Bodenplatte (12, 32) gegenüberliegend angeordnet sind, indem sie eine Art Bogen entweder vom achsseitigen Lagerauge zum anderen achsseitigen Lagerauge (14, 10) und vom rahmenseitigen Lagerauge zum anderen rahmenseitigen Lagerauge (15,10) oder vom jeweils achsseitigen Lagerauge zum rahmenseitigen Lagerauge (33,30) bilden, und damit einen horizontalen Durchzug senkrecht oder in Richtung der Fahrzeuglängsachse bilden, oder dass die vertikalen Stege (43, 44, 53, 54) mehr in der Mitte der Deck- (41, 51) oder Bodenplatte (42, 52) angeordnet sind und keinen (40) oder ein oder zwei Durchzüge (50) bilden.

5. Vierpunktlenker nach den Ansprüchen 1 bis 5,
**dadurch gekennzeichnet,**
**dass** an besonders hoch belasteten Randstellen, beispielsweise an den Anlenkstellen mit der Starrachse, die Breite der Deck- (11, 31, 41, 51) bzw. Bodenplatte (12, 32, 42, 52) relativ kurz vor der Schweißnaht bzw. dem Anschluss zum jeweiligen Lagerauge (15, 35, 45, 55) hin verbreitert ist.

6. Vierpunktlenker nach Anspruch 5,
**dadurch gekennzeichnet,**
**dass** die Lageraugen (15, 35, 45, 55, 66) zentrisch oder exzentrisch sein können (60) und wobei bei der exzentrischen Ausführung die dickere Seite die Schweißseite ist.

7. Vierpunktlenker nach Anspruch 1,
**dadurch gekennzeichnet,**
**dass** das X-förmige offene Bauteil (60) aus einer mittleren Platte (61) und darauf bevorzugt senkrecht angeordneten geraden oder gebogenen Blechen (62, 63, 64, 65) gebildet ist, die miteinander verschweißt sind, wobei die Bleche (62 bis 65) zusammenstoßen können oder nicht, wobei die Höhe der Bleche (62, 63, 64, 65) nach Festigkeitsgesichtspunkten gestaltet sind.

8. Vierpunktlenker nach Anspruch 7,
**dadurch gekennzeichnet,**
**dass** die bevorzugt senkrechten Bleche (62, 63, 64, 65) in der Höhe durchgängig sind und die mittlere Platte (61) aus mehreren Teilen besteht und an den bevorzugt senkrechten Blechen verschweißt ist.

9. Vierpunktlenker nach Anspruch 1 bis 8,
**dadurch gekennzeichnet,**
**dass** vorgefertigte Teile (11, 12, 31, 32, 33, 41, 42, 43, 44, 51, 52, 53, 54, 61, 62, 63, 64, 71, 72, 73, 74, 81, 82, 83, 84, 85, 86) des zusammengeschweißten Bauteiles aus zwei unverstärkten (11, 12) oder verstärkten Blechen (31, 32, 41, 42, 51, 52, 61, 62, 71, 72, 81, 82) gedrückte oder ebene Blechteile sind.

10. Vierpunktlenker nach Anspruch 1 bis 10,
**dadurch gekennzeichnet,**
**dass** die bevorzugt vertikalen Versteifungen sich in der horizontalen Symmetrieachse der Lageraugen nicht berühren (30, 40 links, 50 links, 60, 70 links) oder sich gegebenenfalls teilweise in der horizontalen Symmetrieebene der Lageraugen treffen (30 rechts, 40 rechts, 50 rechts, 70 rechts) und in dieser Symmetrieebene (oder auch davon abweichend) zusammengeschweißt sein können (z. B. 44' mit 44") oder über die bevorzugt vertikale Höhe aus einem oder mehreren ggf. durchgehenden Teilen (44' mit 44" als ein Teil), die z. B. zur Gewichtseinsparung auch gelocht sein können, bestehen.

11. Vierpunktlenker nach Anspruch 10,
**dadurch gekennzeichnet,**
**dass** die bevorzugt vertikalen Versteifungen nahe oder an der Außenkontur der Deck- (31, 41) bzw. Bodenplatte (32, 42) gegenüberliegend angeordnet sind, indem sie eine Art Bogen entweder vom achsseitigen Lagerauge zum anderen achsseitigen Lagerauge (44), und vom rahmenseitigen Lagerauge zum anderen rahmenseitigen Lagerauge (43), oder vom jeweils achsseitigen Lagerauge zum rahmenseitigen Lagerauge (33) bilden, oder auch beides zusammen.

12. Vierpunktlenker nach Anspruch 11,
**dadurch gekennzeichnet,**
**dass** die bevorzugt vertikalen Versteifungen (53, 54) mehr in der Mitte der Deck- (51) oder Bodenplatte (52) angeordnet sind und paarweise jeweils nicht von einem Lagerauge bis zu einem anderen Lagerauge reichen (z. B. 54' und 54") oder sich paarweise berühren (z. B. 53' bzw. 53", woraus dann jeweils ein Teil werden kann).

13. Vierpunktlenker nach Anspruch 12,
**dadurch gekennzeichnet,**
**dass** die bevorzugt vertikalen Versteifungen, die ein- oder zweiteilig sein können, jeweils gerade oder gekrümmt diagonal von einem achsseitigen zu einem rahmenseitigen Lagerauge gehen (63' mit 64' bzw. 63" mit 64") und im Treffpunkt nicht verschweißt sind, oder verschweißt sein können.

14. Vierpunktlenker nach Anspruch 1 bis 13,
**dadurch gekennzeichnet,**
**dass** an besonders hochbelasteten Randstellen der in der Draufsicht X-förmigen beiden Deck- (11, 31, 41, 51, 61, 71, 81) bzw. Bodenbleche (12, 32, 42, 52, 62, 72, 82), beispielsweise an den Anlenkstellen mit der Starrachse, die Breite der Deck- (11, 31, 41, 51, 61, 71, 81) bzw. Bodenbleche (12, 32, 42, 52, 62, 72, 82) relativ kurz vor der Schweißnaht bzw. dem Anschluss zum jeweiligen Lagerauge (13, 34, 45, 55, 65, 75, 87) hin verbreitert ist.
